# EUROPEAN PATENT APPLICATION

(11) **EP 2 362 085 A2**
(43) Date of publication of application: **31.08.2011**
(21) Application number: 11001472.7
(22) Date of filing: 22.02.2011
(51) Int. Cl.: F02D 41/02, F02D 41/00

(54) **Exhaust valve actuation system for diesel particulate filter regeneration**

(30) Priority: 25.02.2010 US 712282
(71) Applicant: International Engine Intellectual Property Company, LLC, Warrenville IL 60555 (US)
(72) Inventor: Makartchouk, Andrei, Hinsdale, IL 60521 (US); Buzinov, Andrey Y., Westmont, IL 60559 (US)
(74) Representative: Kuhnen & Wacker

(57) **Abstract**

An exhaust valve actuation system (30) for initiating a regeneration event at a diesel particulate filter (24) includes an engine control module (42) associated with an engine (14). A plurality of exhaust valves (32) correspond to a plurality of engine cylinders (C1-C6). When either a predetermined amount of back pressure or a predetermined temperature, or both, are communicated to the engine control module (42), the engine control module actuates at least one exhaust valve (32) to open. Gas or gas-fuel mixture is compressed and heated inside of the cylinder (Cl) corresponding to the opened exhaust valve (32). At least one exhaust valve (32) is not opened by the engine control module (42), which permits combustion inside the corresponding cylinder (C2).

## Description

### BACKGROUND

Embodiments described herein relate to a system and method for heating exhaust gas. More specifically, embodiments described herein relate to a system and method for heating exhaust gas to create a regeneration event at a diesel particulate filter.

Exhaust gas aftertreatment systems in diesel vehicles are located downstream of the engine for treating exhaust gases emitted from the engine. The aftertreatment systems typically include a diesel oxidation catalyst (DOC), and a diesel particulate filter (DPF). Particulate matter from the exhaust gas accumulates on the diesel particulate filter, and if left unchecked, can create a back pressure in the aftertreatment system and the diesel engine. Without a regeneration event, the DPF can become plugged with soot and the engine may not operate properly.

The regeneration event is the periodic oxidation of the collected particulate matter in the aftertreatment system during routine diesel engine operation. When the diesel particulate filter of the exhaust system experiences a build-up of particulate matter, the particulate matter is oxidized to "regenerate" the filter. Regeneration is typically initiated by increasing engine load and activating a post-injection of diesel fuel into the exhaust stream. The combination of the increased engine load and the post-injection provides sufficient heat to oxidize the trapped particulate matter within the diesel particulate filter.

During idling or part load operation conditions, fuel injected into the combustion cycle is not enough to maintain exhaust gas temperature sufficient to start the DPF regeneration cycle. As such, the loading of the engine must be increased to provide a sufficiently heated exhaust gas to initiate the regeneration downstream at the diesel particulate filter. However many vehicles operate on a "stop and drive" or frequent idling basis, and the resulting exhaust gas may not have a sufficiently high temperature to initiate the regeneration.

### SUMMARY

An exhaust valve actuation system for initiating a regeneration event at a diesel particulate filter includes an engine control module associated with an engine. A plurality of exhaust valves correspond to a plurality of engine cylinders. When either a predetermined amount of back pressure or a predetermined temperature, or both, are communicated to the engine control module, the engine control module actuates at least one exhaust valve to open. Gas is compressed and heated inside of the cylinder corresponding to the opened exhaust valve. At least one exhaust valve is not opened by the engine control module, which permits combustion inside the corresponding cylinder.

A method of regenerating an exhaust aftertreatment system of an engine includes the steps of providing a fluid passageway from the engine to a diesel particulate filter. The method also includes the steps of sensing and communicating a back pressure of the aftertreatment system or a temperature of the aftertreatment system, or both, to an engine control module. The engine control module compares the back pressure or the temperature, or both, to a predetermined back pressure or temperature, or both. On the basis of the comparison, the engine control module actuates at least one exhaust valve of a cylinder, and the exhaust valve is opened to compress gas inside of the cylinder. The heated compressed gas from the cylinder is fluidly communicated to the diesel particulate filter. Not all of the exhaust valves are opened by the engine control module so that combustion can continue to occur at the remaining cylinders. The heated exhaust gas from the remaining cylinders is also fluidly communicated to the diesel particulate filter.

An exhaust valve actuation system for initiating a regeneration event at a diesel particulate filter includes an engine control module associated with an engine. The system also includes either a temperature sensor for sensing the temperature at the aftertreatment system, or a back pressure sensor for sensing the pressure at the aftertreatment system, or both. The temperature or the back pressure, or both, are communicated to the engine control module. A plurality of exhaust valves correspond to a plurality of cylinders in the engine. A high pressure oil manifold is associated with the engine and has a shut-off valve that selectively prevents oil from an injector oil gallery from flowing to an exhaust valve gallery. When either a predetermined amount of back pressure or a predetermined temperature, or both, are communicated to the engine control module, the engine control module deactivates the shut-off valve. Deactivation of the shut-off valve permits oil from the injector oil gallery to flow to the exhaust valve gallery to open an exhaust valve. At least one of the exhaust valves is not opened by the engine control module to permit combustion inside the corresponding cylinder.

### BRIEF DESCRIPTION OF THE DRAWINGS

FIG. 1 is a schematic of an engine having an exhaust aftertreatment system with a diesel particulate filter located downstream of the engine.

FIG. 2 is a schematic of an exhaust valve actuation system for providing heated gases from the engine.

FIG. 3A is a section view of a high pressure oil manifold of the exhaust valve actuation system when the system is not actuated.

FIG. 3B is a transverse section view of the high pressure oil manifold of the exhaust valve actuation system when the system is not actuated.

FIG. 4A is a section view of the high pressure oil manifold of the exhaust valve actuation system when the system is actuated.

FIG. 4B is a transverse section view of the high pressure oil manifold of the exhaust valve actuation system when the system is actuated.

### DETAILED DESCRIPTION

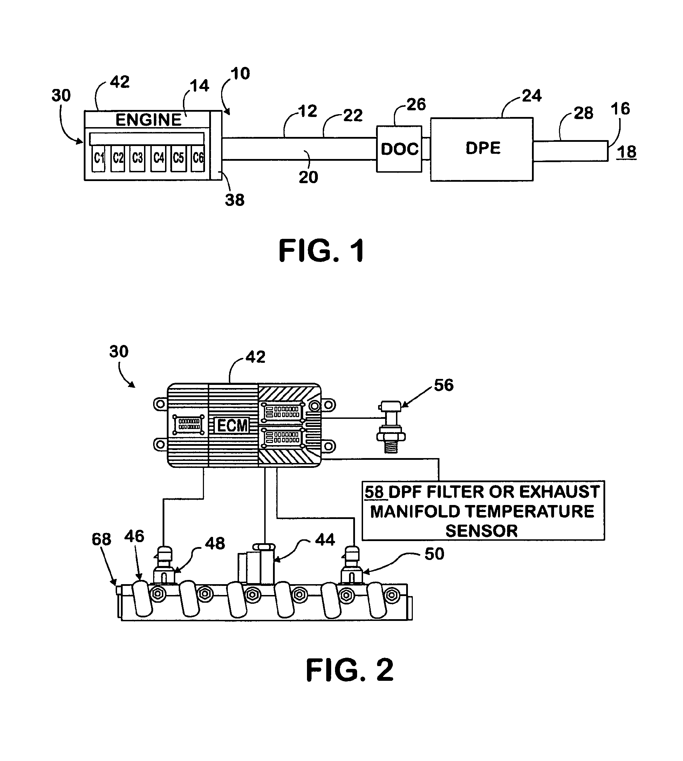

Referring to FIG. 1, an exhaust gas aftertreatment system for a vehicle is indicated generally at 10, and has an exhaust pipe assembly 12 extending from an engine 14 to an outlet 16, such as the outlet to an ambient 18. The exhaust pipe assembly 12 forms a fluid passageway 20 for the flow of exhaust gas F from the engine 14 to the ambient 18.

A first portion 22 of the exhaust pipe assembly 12 extends from the engine 14 to a diesel particulate filter (DPF) 24. The DPF 24 is a filter constructed from a very high temperature resistant material. The DPF 24 catches and holds particulate matter entrained within the exhaust gases discharged into the exhaust aftertreatment system 10. The DPF 24 is periodically regenerated to limit increases in exhaust aftertreatment system 10 back pressure and to maintain engine 14 efficiency. A diesel oxidation catalyst (DOC) 26 may be located upstream of the DPF 24. A second portion 28 of the exhaust pipe 12 assembly extends from the DPF 24 to the outlet 16. Other components may be disposed on the on the aftertreatment system 10.

Referring now to FIGs. 1-4B, an exhaust valve actuation system 30 deactivates at least one cylinder C1 of the engine 14 from fuel injection and combustion. The cylinder C1 is deactivated by opening an exhaust valve 32 corresponding to the deactivated cylinder, and using compressive forces to heat up the gas in the deactivated cylinder.

In the deactivated cylinder C1, a cylinder piston 34 compresses the air received by an air intake 36, which increases the temperature of the air. The heated air is released or bled from the cylinder C1 through the partially opened exhaust valve 32 to an exhaust manifold 38 and on to the DPF 24. The high pressure formed by compression in the cylinder C1 is also a braking force that tends to resist the rotation of the crankshaft (not shown) of the engine 14.

While the engine 14 of FIG. 1 has six cylinders C1 - C6, it is possible that the exhaust valve actuation system 30 can be used on any engine with at least two cylinders. Further, while the exhaust valve actuation system 30 deactivates at least one cylinder C1, the system may deactivate an equal number of cylinders as the number of activated cylinders, or alternately, an unequal number of cylinders. The exhaust valve actuation system 30 described below opens the exhaust valves 32 on a plurality of the cylinders C1, C3, C5 in the engine 14.

At least one cylinder C2 is not deactivated by the exhaust valve actuation system 30. The remaining cylinders C2, C4, C6 that remain activated continue to receive injected fuel at a fuel injector 40 and combust the fuel to maintain the engine speed. To compensate for the deactivated cylinders C1, C3, C5 that are not combusting fuel, and to overcome the resistance of the deactivated cylinders on the crankshaft of the engine 14, the activated cylinders C2, C4, C6 may receive an increased amount of fuel at the fuel injector 40. The resulting exhaust gas from the activated cylinders C2, C4, C6 has an increased temperature.

The combination of the heated, compressed gas from the deactivated cylinders C1, C3, C5, and the heated exhaust gas from the activated cylinders C2, C4, C6, provides sufficient heat to the exhaust gas to initiate regeneration at the DPF 24. With the exhaust valve actuation system 30, the engine 14 provides the heated, compressed gas from the deactivated cylinders C1, C3, C5, and the heated exhaust gas from the activated cylinders C2, C4, C6 while the engine 14 operates at a low idling and low engine load condition.

The exhaust valve actuation system 30 includes an engine control module (ECM) 42 that controls an exhaust shut-off valve 44 mounted on a high pressure manifold 46. A brake control pressure sensor 48 and an injection pressure sensor 50 may be disposed on the high pressure manifold 38 to monitor and communicate the oil pressure in an exhaust valve gallery 52, and the oil pressure in an injector oil gallery 54 of the high pressure manifold, respectively, to the ECM 42.

An exhaust back pressure sensor 56 monitors and communicates the back pressure in the aftertreatment system 10, such as at the exhaust manifold 38 or the DPF 24, and communicates the back pressure to the ECM 42. It is possible that the back pressure can be a change in pressure between two locations on the aftertreatment system 10, such as upstream and downstream of the DPF 24.

A temperature sensor 58 senses the temperature at the DPF 24, the exhaust manifold 38, or anywhere between the cylinders C1-C6 and the DPF, and communicates the temperature to the ECM 42. It is possible that the temperature can be a change in temperature between two locations on the aftertreatment system 10, such as upstream and downstream of the DPF 24.

The ECM 42 has predetermined back pressure values, exhaust valve gallery pressure values, injector oil gallery pressure values, and temperature values that are compared with the values communicated to the ECM by the sensors 48, 50, 56, 58. Below the predetermined temperature value of aftertreatment system 10 at the sensor 58, or above the predetermined pressure value of back pressure in the aftertreatment system 10 at the sensor 56, the DPF 24 may be clogged with soot or other particulate matter, and the exhaust valve actuation system 30 may be actuated.

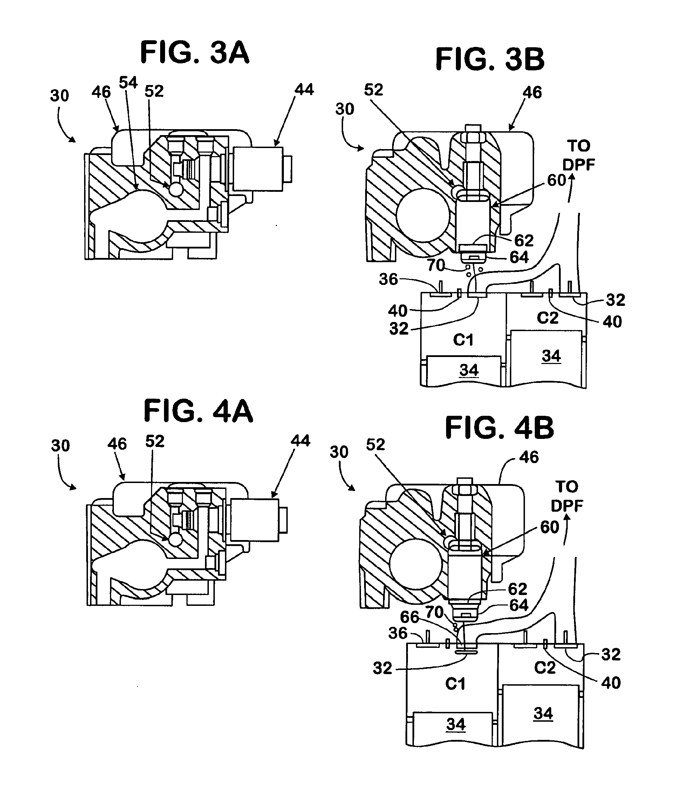

Referring to FIGs. 2 and 3A-3B, during normal operation of the engine 14, oil in the high pressure manifold 46 flows to the fuel injector oil gallery 54, but the exhaust shut-off valve 44 selectively prevents the oil from entering the exhaust valve gallery 52. During normal operation, all cylinders C1-C6 receive fuel from the fuel injector 40 and are actuated for combustion.

When a predetermined amount of exhaust back pressure is monitored by the exhaust back pressure sensor 56, or when a predetermined temperature is monitored by the temperature sensor 58, the values are communicated to the ECM 42 and the ECM 42 commands the actuation of the exhaust valve system 30. The ECM 42 actuates the exhaust valve system 30 by deactivating the shut-off valve 44, which permits the flow of oil to the exhaust valve gallery 52.

Referring now to FIG. 4A-4B, when the exhaust valve actuation system 30 is actuated, at least one of the cylinders C1 is deactivated using high pressure oil to force the exhaust valve 32 at least partially open. The shut-off valve 44 is deactivated, which permits oil from the injector oil gallery 54 to flow to the exhaust valve gallery 52, which in turn, permits oil to be distributed to a piston assembly 60 that corresponds to the cylinder C1 (or cylinders C1, C3, C5) to be deactivated. The oil in the piston assembly 60 causes a piston 62 to displace from a retracted position (FIG. 3B) to a deployed position (FIG. 4B), which displaces an exhaust valve bridge 64. Displacement of the exhaust valve bridge 64 forms an opening 66 between the exhaust valve seat and an exhaust valve 32 of the engine cylinder C1.

With the exhaust valve 32 opened, the heated compressed air flows out of the opening 66, to the exhaust manifold 38 and is fluidly communicated to the DPF 24. At the exhaust manifold 38, the heated compressed air from the deactivated cylinders C1, C3, C5 is combined with the heated exhaust gas from the activated cylinders C2, C4, C6, and gases from both sources are fluidly communicated to the DPF 24.

Simultaneously or in quick succession with opening of the exhaust valve 32, the ECM 42 de-activates the injectors 40 of the de-activated cylinders to prevent fuel injection in the de-activated cylinders C1, C3, C5. However, the injectors 40 in the activated cylinders C2, C4, C6 remain activated.

It is possible that in the deactivated cylinders C1, C3, C5, even though there is no combustion at these cylinders during exhaust valve system actuation, that the fuel injectors 40 can inject fuel to be fluidly communicated downstream through the exhaust manifold 38 and to the DPF 24. The fuel may be combusted at the DOC 26 or upstream of the DOC, resulting in additional heat at the DPF for regeneration.

After regeneration occurs, as indicated by the exhaust back pressure sensor 56 to the ECM 42 that the back pressure is below the predetermined value, the ECM turns off the exhaust valve actuation system 30. When the exhaust valve actuation system 30 is turned off, a pressure relief valve 68 (FIG. 2) is opened and the shut-off valve 44 is activated, preventing the oil from the injector oil gallery 54 from entering the exhaust valve gallery 52. Oil in the exhaust valve gallery 52 drains to a sump (not shown), and the exhaust valve 32 is retracted to the retracted position (FIG. 3B) under force of at least one spring 70. Normal fuel injection resumes in the formerly deactivated cylinder C1, which again becomes an activated cylinder for combustion.

The aftertreatment system 10 allows the regeneration of the DPF 24 without significantly increasing the engine speed or loading. With the aftertreatment system 10, the vehicle can run on a "stop and drive" basis, where the engine 14 can be run at a lower speed and lower loading, while at the same time, providing exhaust gas flow F with a sufficiently high temperature to initiate the regeneration at the DPF 24.

## Claims

1. An exhaust valve actuation system of an engine having a plurality of cylinders for initiating a regeneration event at a diesel particulate filter of an exhaust aftertreatment system, the exhaust valve actuation system comprising:
an engine control module associated with the engine;
a plurality of exhaust valves corresponding to the plurality of engine cylinders;
wherein when at least one of a predetermined amount of back pressure and a predetermined temperature is communicated to the engine control module, the engine control module actuates at least one of the plurality of exhaust valves to open to permit the compression of gas or gas-fuel mixture inside the corresponding cylinder, and wherein at least one of the plurality of exhaust valves is not actuated to open to permit combustion inside the corresponding cylinder.

2. The exhaust valve actuation system of claim 1 wherein the exhaust valves are opened using high pressure oil from a high pressure oil manifold associated with the engine.

3. The exhaust valve actuation system of claim 2 wherein the high pressure oil manifold has an injection oil gallery and an exhaust valve gallery.

4. The exhaust valve actuation system of claim 3 further comprising a shut-off valve operable to selectively prevent and allow the fluid communication of oil from the injection oil gallery to the exhaust valve gallery.

5. The exhaust valve actuation system of claim 4 wherein when oil is communicated to the exhaust valve gallery, a piston is displaced from a retracted position to an extended position.

6. The exhaust valve actuation system of claim 5 wherein displacement of the piston to the extended position opens the exhaust valve.

7. The exhaust valve actuation system of claim 1 wherein the cylinder corresponding to the at least one open exhaust valve compresses gas or gas-fuel mixture resulting in heated, compressed gas or gas-fuel mixture, and the heated, compressed gas or gas-fuel mixture is fluidly communicated out of the exhaust valve to the diesel particulate filter.

8. The exhaust valve actuation system of claim 1 wherein the cylinder corresponding to the at least one of the plurality of exhaust valves that is not open receives an increased amount of fuel resulting in heated exhaust gas, and the heated exhaust gas is fluidly communicated out of the exhaust valve to the diesel particulate filter.

9. The exhaust valve actuation system of claim 1 wherein when the engine control module does not open the at least one exhaust valve, the corresponding cylinder is used for combustion.

10. The exhaust valve actuation system of claim 1 further comprising at least one of a temperature sensor for sensing the temperature at the aftertreatment system and a back pressure sensor for sensing the pressure at the aftertreatment system, wherein at least one of the temperature sensor and the back pressure sensor communicate at least one of the temperature and the back pressure to the engine control module.

11. A method of regenerating an exhaust aftertreatment system of an engine having a diesel particulate filter, the method comprising:
providing a fluid passageway from the engine to the diesel particulate filter;
sensing and communicating at least one of a back pressure of the aftertreatment system and a temperature of the aftertreatment system to an engine control module, and comparing at least one of the back pressure and the temperature to a predetermined back pressure and a predetermined temperature, wherein on the basis of the comparison, the engine control module actuates at least one exhaust valve of a cylinder;
opening the at least one exhaust valve to compress gas or gas-fuel mixture inside of the cylinder in response to the command of the engine control module, wherein not all exhaust valves are opened by the engine control module so that combustion can continue to occur at the remaining cylinders;
fluidly communicating the compressed, heated gas or gas-fuel mixture from the cylinder corresponding to the opened exhaust valve to the diesel particulate filter to initiate regeneration; and
fluidly communicating the combusted exhaust gases from the remaining cylinders to the diesel particulate filter to initiate regeneration.

12. The method of claim 11 further comprising the step of the engine control module deactivating a shut-off valve and permitting oil from an injector oil gallery to flow to the exhaust valve gallery.

13. The method of claim 12 further comprising the step of permitting oil to be distributed to a piston assembly that corresponds to the cylinder having the exhaust valve to be opened.

14. The method of claim 13 further comprising the step of displacing a piston of the piston assembly from a retracted position to a deployed position under oil pressure.

15. The method of claim 11 further comprising the step of injecting an increased amount of fuel into the remaining cylinders for combustion.

16. The method of claim 11 further comprising the step of opening the exhaust valve on three cylinders, and not opening the exhaust valve on three cylinders.

17. The method of claim 11 further comprising the step of injecting fuel into the cylinder corresponding to opened exhaust valve, and fluidly communicating the injected fuel to the aftertreatment system.

18. An exhaust valve actuation system of an engine having a plurality of cylinders for initiating a regeneration event at a diesel particulate filter of an exhaust aftertreatment system, the exhaust valve actuation system comprising:
an engine control module associated with the engine;
at least one of a temperature sensor for sensing the temperature at the aftertreatment system and a back pressure sensor for sensing the pressure at the aftertreatment system, wherein at least one of the temperature sensor and the back pressure sensor communicate at least one of the temperature and the back pressure to the engine control module;
a plurality of exhaust valves corresponding to the plurality of cylinders in the engine;
a high pressure oil manifold associated with the engine and having a shut-off valve selectively preventing oil from an injector oil gallery from flowing to an exhaust valve gallery;
wherein when at least one of a predetermined amount of back pressure and a predetermined temperature is communicated to the engine control module, the engine control module deactivates the shut-off valve, permitting oil from the injector oil gallery to flow to the exhaust valve gallery to open at least one exhaust valve, wherein at least one of the plurality of exhaust valves is not actuated to open by the engine control module to permit combustion inside the corresponding cylinder.

19. The exhaust valve actuation system of claim 18 wherein the oil in the exhaust valve gallery displaces a piston from a retracted position to an extended position.

20. The exhaust valve actuation system of claim 19 wherein the displacement of the piston to the extended position opens the exhaust valve.
